# EUROPÄISCHE PATENTSCHRIFT

(11) **EP 2 310 465 B1**
(45) Veröffentlichungstag und Bekanntmachung des Hinweises auf die Patenterteilung: **26.12.2012**
(21) Anmeldenummer: 09779623.9
(22) Anmeldetag: 03.06.2009
(51) Int. Cl.: C09D 183/04, C04B 41/49

(54) **ZUSAMMENSETZUNG FÜR BAUTENSCHUTZANWENDUNGEN BASIEREND AUF ALKYLALKOXYSILOXANEN MIT VERBESSERTEN ABPERLEIGENSCHAFTEN**
COMPOSITION BASED ON ALKYLALKOXY SILOXANES WITH IMPROVED DRIPPING CHARACTERISTICS FOR STRUCTURAL PRESERVATION APPLICATIONS
COMPOSITION POUR DES APPLICATIONS DE PROTECTION DES BÂTIMENTS, SUR LA BASE D'ALKYLALCOXYSILOXANES, PRÉSENTANT DES PROPRIÉTÉS AMÉLIORÉES D'ÉGOUTTAGE

(30) Priorität: 28.07.2008 DE 102008040783
(43) Veröffentlichungstag der Anmeldung: 20.04.2011
(73) Patentinhaber: Evonik Degussa GmbH, 45128 Essen (DE)
(72) Erfinder: FRIEDEL, Manuel, CH-8048 Zürich (CH); LJESIC, Spomenko, 79618 Rheinfelden (DE); GIESSLER-BLANK, Sabine, 44227 Dortmund (DE)
(86) Internationale Anmeldenummer: PCT/EP2009/056807
(87) Internationale Veröffentlichungsnummer: WO 2010/012535

(56) Entgegenhaltungen:
- EP-A- 0 472 215
- EP-A- 0 826 650

## Beschreibung

Die vorliegende Erfindung betrifft eine Zusammensetzung zur Hydrophobierung von porösen mineralischen Substraten auf der Basis von Alkylalkoxysiloxanen mit verbesserten Abperleigenschaften, deren Herstellung und deren Verwendung für den Schutz von Bauten. Alkylalkoxysiloxane werden nachfolgend auch kurz als (hydrophobierender) Wirkstoff oder als oligomere Silansysteme bzw. Silanoligomere bezeichnet.

Es ist lange bekannt, dass Alkylketten tragende Silanverbindungen hydrophobierende Eigenschaften auf porösen mineralischen Stoffen erzeugen können. So zeichnen sich insbesondere monomere, kürzerkettige Alkylalkoxysilane durch eine gute Tiefenimprägnierung aus (EP 0 101 816).

Oligomere Silansysteme, wie Alkylalkoxysiloxane, haben Vorteile hinsichtlich ihrer Verwendung als Hydrophobiermittel, da sie bei der Anwendung weniger flüchtige organische Verbindungen (VOC) freisetzen als monomere Silansysteme.

Die Hydrolyse- und Abbindegeschwindigkeit solcher oligomeren Silansysteme ist geringer, als die vergleichbarer monomerer Systeme (E. P. Plueddemann, Silane Coupling Agents, Plenum Press, New York, 1991). Durch die Zugabe von geeigneten Hydrolyse- und Kondensationskatalysatoren kann aber die Geschwindigkeit der Abbindereaktion solcher Bautenschutzmittel verbessert werden.

Ferner ist bekannt Bautenschutzmittel in Form einer Lösung oder einer flüssigen oder pastösen bzw. cremeartigen, d. h. hochviskosen Emulsion anzuwenden (u. a. EP 0 814 110, EP 1 205 481, EP 1 205 505, WO 06/081892).

Ein von Anwendern häufig gewünschtes Qualitätsmerkmal von Hydrophobierungen ist das Abperlen von Wassertropfen auf der Oberfläche eines hydrophobierten Substrats (kurz Abperleffekt genannt).

Leider verhindern zuvor genannte Bautenschutzmittel nach Applikation auf einem porösen mineralischen Substrat zwar das Eindringen von Wasser (Hydrophobierung), jedoch werden dabei keine oder nur sehr schwach ausgeprägte Abperleigenschaften erzielt.

US 4,846,886 betrifft eine wasserabweisende Zusammensetzung für die Behandlung poröser Substrate, wobei die Zusammensetzung u. a. ein Alkylalkoxysilan, ein Gemisch aus Alkohol, Benzinkohlenwasserstoffen und Glykolether als Träger, ein Metallsalz als Katalysator sowie eine Substanz enthält, die bei Applikation des Mittels einen Abperleffekt bewirkt, wobei diese Substanz aus der Reihe von aminosalzfunktionalisierten Siloxancopolymeren, Silikonkautschuk, Methylsilikone oder eines trifluorpropylfunktionalisierten Methylsilikons ausgewählt ist. Auch auf diesem Wege erreichbaren Abperleigenschaften sind für die meisten Anwender nicht ausreichend stark.

WO 06/081891 lehrt, dass eine Bautenschutzemulsion als Abperlhilfsmittel ein Fluorpolymer enthalten kann. Diese Emulsionen haben den Nachteil, dass die Wirksamkeit auf Untergründen geringer Alkalinität weniger gut ist.

Aus EP 0 826 650 sind wässrige Emulsionen bekannt, die fluorhaltige Polymere enthalten. Nachteil der beschriebenen Formulierungen ist, dass die Hydrolyse- und Abbindereaktion zu langsam ist und bis zur vollen Ausbildung des Wasserabperleffekts mehrere Tage vergehen müssen.

Darüber hinaus ist bekannt, dass es beim Einmischen von Zusatzstoffen in wässrigen oder organischen Systeme zu Schaumbildung kommen kann, die in der betrieblichen Praxis oft störend ist. Fluorhaltige Polymere können Schäume stabilisieren und werden daher beispielsweise zur Stabilisierung von Feuerlöschschäumen eingesetzt (WO 2008/027604). Diese Schaumbildung kann z. B. durch Zugabe geeigneter Entschäumer verhindert werden. Jedoch stellt die Zugabe eines weiteren Inhaltsstoffes einen zusätzlichen Kostenfaktor dar.

Der vorliegenden Erfindung lag die Aufgabe zugrunde, die Abperleigenschaften von Alkylsiloxan-basierenden Zusammensetzungen für Bautenschutzanwendungen zu verbessern. Gleichzeitig war man bestrebt, nach Möglichkeit die Tiefenimprägniereigenschaften der Wirkstoffe zu erhalten. Weiter war es ein Anliegen der vorliegenden Erfindung, nach Möglichkeit die Schaumbildung bei der Herstellung solcher Zusammensetzung zu mindern.

Die Aufgabe wird erfindungsgemäß entsprechend den Angaben in den Patentansprüchen gelöst. Die hier vorgelegten Ansprüche sind somit gleichzeitig auch als ein Bestandteil der Beschreibung zu sehen.

Überraschenderweise wurde gefunden, dass man durch gezieltes Zumischen mindestens eines Abperlhilfsmittels aus der Reihe der fluorhaltigen Polymere zu einem Alkylalkoxysiloxan-basierenden Mittel für die Hydrophobierung von porösen mineralischen Substraten in vorteilhafter Weise einen deutlich verbesserten Abperleffekt erreichen kann.

Auch kann bei vorliegender Erfindung eine Schaumbildung in einfacher und wirtschaftlicher Weise vorteilhaft weitestgehend vermieden werden.

Darüber hinaus zeichnen sich die erfindungsgemäße Zusammensetzungen durch eine sehr gute Reduktion der Wasseraufnahme eines damit behandelten Substrats und eine hohe Eindringtiefe bei gleichzeitig hervorragenden Abperleigenschaften gegenüber Wasser sowie einer ausreichend schnellen Abbindereaktion aus.

In diesem Sinne können erfindungsgemäße Zusammensetzungen besonders vorteilhaft zum Hydrophobieren von porösen mineralischen Substraten, vorzugsweise silikatischen Materialien, insbesondere Baustoffen wie Beton, Faserzement, Ton, Ziegel, Marmor, Granit, Sandstein oder Kalksandstein, um nur einige Beispiele zu nennen, verwendet werden.

So können erfindungsgemäße Zusammensetzungen in Substanz, gelöst in organischen Lösemitteln sowie als wässrige Emulsionen vorliegen und appliziert werden.

Ferner können erfindungsgemäße Zusammensetzungen mit einem geeigneten Lösemittel bzw. Verdünnungsmittel vorteilhaft auf eine gewünschte Konzentration an Wirkstoff eingestellt werden.

Bevorzugte verwendete Lösemittel bzw. Verdünnungsmittel sind dazu geeignete organischen Lösemittel, beispielsweise - aber nicht ausschließlich - aliphatische sowie aromatische Kohlenwasserstoffe mit einem Siedepunkt oberhalb der Raumtemperatur, wie C₆- bis C₁₂-Alkane, Benzin, Waschbenzin, Diesel, Kerosin, Toluol, Xylol, Alkohole bzw. Polyole, wie Methanol, Ethanol, Isopropanol, t-Butanol, Pentanol, Hexanol, Octanol, Nonanol, Isononanol, Glycerin, Ketone, wie Aceton, oder ein Gemisch aus mindestens zwei der zuvor genannten organischen Lösemittel. Lösemittel kann aber auch Wasser sein.

Gegenstand der vorliegenden Erfindung ist eine Zusammensetzung zur Hydrophobierung poröser mineralischer Substrate und zur Erzeugung eines Abperleffekts auf der Oberfläche des Substrats, wobei die Zusammensetzung auf - mindestens einem Silanoligomer, wobei das Silanoligomer ausgewählt ist aus Alkylalkoxysiloxanen oder entsprechenden Gemischen der idealisierten Formel I 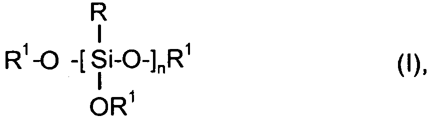 in der n gleich oder verschieden ist und n eine Zahl von 2 bis 40 ist, bevorzugt von 2 bis 20, R für C₁-C₁₈-Alkyl steht, Gruppen R¹ gleich oder verschieden sind und R¹ ein Wasserstoffatom oder ein Alkylrest mit 1 bis 6 Kohlenstoffatomen darstellt, wobei das mittlere Molekulargewicht ≤ 1 200 g/Mol beträgt,
- mindestens einem Hydrolyse- bzw. Kondensationskatalysator,
- mindestens einem fluorhaltigen Polymer,
- optional Wasser und/oder mindestens einem organischen Lösemittel,
- optional mindestens einem Emulgator und
- optional weiteren Hilfsstoffen
basiert.

Bei einer erfindungsgemäßen Zusammensetzung handelt es sich vorzugsweise um eine Emulsion.

Besagte Alkylalkoxysiloxane (auch als Wirkstoff bezeichnet sowie Bestandteil der Ölphase in einer wässrigen Emulsion) werden aus den Silanoligomeren oder entsprechenden Oligomergemischen der idealisierten Formel I 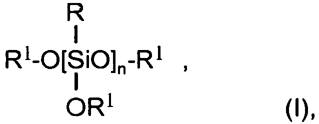 in der R unabhängig voneinander C₁-C₁₈-Alkyl ist, Gruppen R¹ gleich oder verschieden sind und R¹ ein Wasserstoffatom oder ein Alkylrest mit 1 bis 6 Kohlenstoffatomen, vorzugsweise mit 1 oder 2 Kohlenstoffatomen, ist und n den Oligomerisierungsgrad als mit 2 bis 20 bestimmt, ausgewählt. Es handelt sich hierbei vorteilhaft um Oligomerengemische mit einem mittleren Oligomerisierungsgrad von 3 bis 20, vorzugsweise von 4 bis 6, wobei die mittlere Molmasse bevorzugt ≤ 1 200 g/Mol, insbesondere 400 bis 1 200 g/Mol beträgt. Die Silanoligomeren können dabei als lineare, cyclische und/oder verzweigte Einheiten vorliegen.

Bevorzugte Beispiele von Silanoligomeren sind solche mit Resten:
R = CH₃-, C₂H₅-, C₃H₇-, C₄H₉-, i-C₄H₉-, C₆H₁₃-, i-C₆H₁₃-, C₈H₁₆-, i-C₈H₁₆- und
R¹ = H, Methyl oder Ethyl.

Ferner zeichnen sich erfindungsgemäße Zusammensetzungen vorteilhaft durch einen Gehalt an Wirkstoff von 1 bis 98 Gew.-%, vorzugsweise 2 bis 85 Gew.-%, besonders vorzugsweise 3 bis 80 Gew.-%, ganz besonders vorzugsweise 5 bis 75 Gew.-%, insbesondere 8 bis 50 Gew.-%, bezogen auf die Zusammensetzung, aus.

Weiter enthalten erfindungsgemäße Zusammensetzungen vorteilhaft mindestens einen Hydrolyse- bzw. Kondensationskatalysator aus der Reihe der Komplexverbindungen, wie Halogenide, Oxide, Hydroxide, Imide, Alkoholat, Amide, Thiolate, Carboxylate und/oder Kombinationen dieser Substituenten, von Elementen der 3. und 4. Hauptgruppe des Periodensystems der Elemente (PSE) sowie der Nebengruppen II, III, IV, V, VI, VII und VIIIa, VIIIb und VIIIc des PSE, insbesondere Titanate oder Zirkonate, wie beispielsweise Tetra-n-butylorthotitanat oder Tetra-n-propylorthozirkonat. Außerdem können Oxide, Hydroxide, Hydrogenphosphate, Hydrogensulfate, Sulfide, Hydrogensulfide, Carbonate oder Hydrogencarbonate der 1. und 2. Hauptgruppe des PSE und/oder Alkoholate, vorzugsweise Natriummethanolat oder Natriumethanolat und/oder Aminoalkohole, vorzugsweise 2-Aminoethanol oder 2-(N,N-dimethyl)aminoethanol verwendet werden. Schließlich können Carbonsäuren, wie Ameisensäure, Essigsäure oder Propionsäure, sowie Mineralsäuren, wie Salzsäure oder Phosphorsäure, zum Einsatz kommen.

Geeigneterweise beträgt der Gehalt an Katalysator in einer vorliegenden Zusammensetzung 0,1 bis 3 Gew.-%, vorzugsweise 0,1 bis 2 Gew.-%, besonders vorzugsweise 0,5 bis 1,5 Gew.-%, bezogen auf den Wirkstoff.

Insbesondere zeichnen sich erfindungsgemäße Zusammensetzungen mit deutlich verbesserten Abperleigenschaften durch einen Gehalt von mindestens einem fluorhaltigen Polymeren aus.

Bevorzugte fluorhaltige Polymere enthalten Fluor in organisch gebundener Form, insbesondere in Form von bivalenten CF₂- sowie monovalenten CF₃-Gruppen. Die verwendeten fluorhaltigen Polymere können neben C und F weitere Elemente wie Wasserstoff, Stickstoff, Phosphor, Sauerstoff, Schwefel, Chlor, Brom und/oder Jod in gebundener Form enthalten. Erfindungsgemäß verwendete fluorhaltige Polymere können Homopolymere, Copolymere oder Terpolymere sein, wobei im Falle von Copolymeren und Terpolymeren wenigstens eines der zugrunde liegenden Monomere CF₂-Gruppen enthalten muss. CF₂-Gruppen enthaltende Monomere können beispielsweise sein Tetrafluorethylen, Trifluorchlorethylen, Hexafluorpropylen, Vinylidenfluorid, 1,1-Dihydroperfluorbutylacrylat.

Insbesondere bevorzugt man erfindungsgemäß fluorhaltige Polymere der allgemeinen Formel II 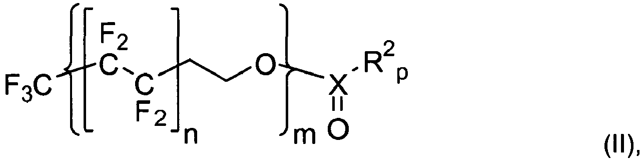 worin unabhängig voneinander
X = C, P oder S ist,
R² = -H, -OH, -CH₃, -C₂H₄, -CH=CH₂, -C(-CH₃)=CH₂, 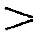 (CH-CH₂)_{q}- oder 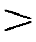 (C(-CH₃)CH₂)_{q}- mit q = 2 bis 200 ist,
m = 1, 2 oder 3 ist,
n = 1 bis 100 ist, und
p = 0, 1 oder 2 ist, mit der Voraussetzung, dass falls X=C, m+p = 2 ist, falls X=P, m+p = 3 ist und falls X=S, m+p = 2 ist.

Darüber hinaus bevorzugt man erfindungsgemäß als fluorhaltige Polymere Copolymerisate und Terpolymerisate aus einer Verbindung gemäß der zuvor genannten Formel mit beispielsweise Ethylen, Propylen, Vinylchlorid, Vinylacetat oder Methacrylsäureester wie Methacrylsäuremethylester. So bevorzugt man beispielsweise fluorhaltige Copolymere der allgemeinen Formel III 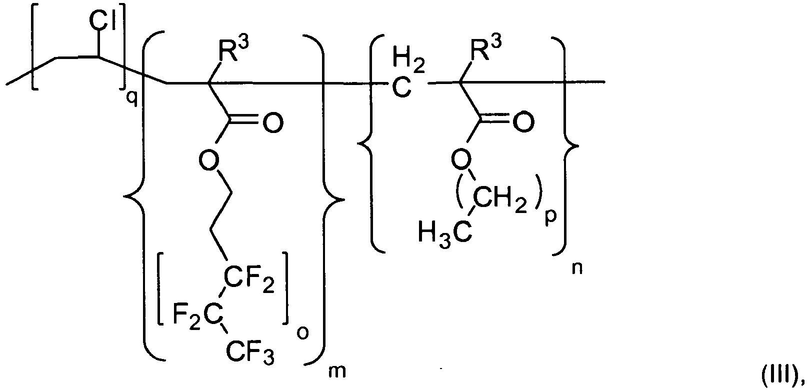 worin unabhängig voneinander
R³ = -H, -CH₃ ist,
m = 1 bis 200 ist,
n = 0 bis 200 ist,
o = 1 bis 100 ist,
p = 1 bis 100 ist und
q= 0 bis 100 ist.

Dabei bevorzugt man in einer erfindungsgemäßen Zusammensetzung einen Gehalt an fluorhaltigen Polymeren, der Begriff Polymere schließt bei der vorliegenden Erfindung Copolymere und Terpolymere ein, von 0,5 bis 6 Gew.-%, besonders bevorzugt sind 1 bis 5 Gew.-%, insbesondere 2 bis 4 Gew.-%, bezogen auf die Zusammensetzung.

Sofern die erfindungsgemäße Zusammensetzung in Form einer wässrigen Emulsion vorliegt, kann diese mindestens einen Emulgator enthalten, der vorteilhaft aus der Reihe der Alkylsulfate mit C₈-C₁₈-Alkyl, Alkyl- und Alkarylethersulfate mit C₈-C₁₈-Alkyl im hydrophoben Rest und mit 1 bis 40 Ethylenoxid (EO)- bzw. Propylenoxid (PO)-Einheiten, Alkylsulfonate mit C₈-C₁₈-Alkyl, Alkarylsulfonate mit C₈-C₁₈-Alkyl, und Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C₈-C₂₀-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C₈-C₂₂-Alkylresten mit Ethylenoxid oder Propylenoxid, Alkylpolyglykoside mit linearen oder verzweigten gesättigten oder ungesättigten C₈-C₂₄-Alkylresten und Oligoglykosidresten mit 1 bis 10 Hexose- oder Pentoseeinheiten, siliciumfunktionelle Tenside oder Mischungen dieser Emulgatoren ausgewählt ist.

Der Gehalt an Emulgator in einer solchen erfindungsgemäßen Zusammensetzung beträgt vorzugsweise 0,01 bis 5 Gew.-%, bezogen auf Gesamtgewicht der Emulsion.

Darüber hinaus kann eine erfindungsgemäße Zusammensetzung vorteilhaft noch übliche Hilfsstoffe, ausgewählt aus anorganischen oder organischen Säuren, Puffersubstanzen, Fungiziden, Bakteriziden, Algiziden, Mikrobioziden, Geruchsstoffen, Korrosionsinhibitoren, Konservierungsmittel, Rheologiehilfsmittel enthalten.

Im Allgemeinen kann man erfindungsgemäße Zusammensetzung wie folgt herstellen:

Die Herstellung der Silanoligomere kann vorteilhaft gemäß EP 0 814 110, EP 1 205 481, EP 1 205 505 erfolgen.

Die erfindungsgemäßen, lösemittelhaltigen Zusammensetzungen können durch einfaches Mischen der einzelnen Komponenten in einem Behältnis mit geeignetem Mischaggregat hergestellt werden. Dieses Mischen kann kontinuierlich, z. B. durch Verwendung eines Mischrohres, oder diskontinuierlich erfolgen.

Die Reihenfolge der Zugabe erfolgt vorteilhaft so, dass zunächst eine Menge des zu verwendenden Lösemittels vorgelegt wird, die es erlaubt, das Rühraggregat zu betreiben, in dieser Menge löst man der Reihe nach die erfindungsgemäßen fluorhaltigen Polymeren, Katalysatoren, Zusatzstoffe und schließlich die erfindungsgemäßen Silanoligomeren. Die restliche Menge an Lösemittel kann nach Zugabe der fluorhaltigen Polymeren oder als letzte Komponente der Mischung zugegeben werden.

Weiterhin ist es vorteilhaft möglich, die erfindungsgemäß einzusetzenden Katalysatoren in den erfindungsgemäß einzusetzenden Silanoligomeren zu lösen und diese Lösung wie oben beschrieben zusammen mit den weiteren Zusatzstoffen in die Lösemittel einzubringen.

Durch Einhaltung einer speziellen Dosierfolge der Komponenten können die erfindungsgemäßen Zusammensetzungen unter stark verminderter Schaumbildung vorteilhaft und ohne den Zusatz eines Entschäumers erhalten werden.

Dazu geht man erfindungsgemäß so vor, dass man 5 bis 70 Gew.-%, vorzugsweise 10 Gew.-% des zu verwendenden Lösemittels bzw. Lösemittelgemischs vorzugsweise in einem Kessel mit Rührereinheit, insbesondere einem Behälter aus Glas oder Edelstahl, vorlegt und das fluorhaltige Polymere bei vorzugsweise einer niedrigen Drehzahl des Rührmotors hinzufügt, besonders vorzugsweise bei 10 bis 100 Umdrehungen pro Minute. Anschließend wird die Restmenge an Lösemitteln dosiert, vorzugsweise unter Rühren bei unveränderter Drehzahl. Dies kann portionsweise oder kontinuierlich, gegebenenfalls in einem Zug, erfolgen. Dann wird das Silanoligomer, optional als wässrige Emulsion, mit dem Katalysator versetzt und das so erhaltene Gemisch bei einer vergleichsweise niedrigen Drehzahl, vorzugsweise bei gleicher Drehzahl, des Rührmotors der bereits zuvor hergestellten Mischung aus Lösemittel und fluorhaltigem Polymer zudosiert. Weitere Hilfsstoffe sowie bei Bedarf zusätzlicher Emulgator können anschließend zudosiert werden. Zuletzt erhöht man die Rührerdrehzahl (Nachrühren), vorzugsweise um den Faktor 1,1 bis 1 000, insbesondere 10, um eine homogene Durchmischung zu gewährleisten. Dabei rührt man bevorzugt über 1 bis 30 Minuten nach.

Vorteilhaft wird darauf geachtet, das Einrühren von Luft und damit eine verstärkte Schaumbildung zu vermeiden.

Die Herstellung einer wässrigen Emulsion ist aus technischer Sicht beispielsweise in WO 06/081892 sowie WO 06/081891 ausführlich beschrieben.

Zur Herstellung einer erfindungsgemäß zusammengesetzten Emulsion können dabei die erfindungsgemäß einzusetzenden fluorhaltigen Polymere und/oder Katalysatoren entweder zusammen mit den anderen Inhaltsstoffen wie den erfindungsgemäß einzusetzenden Emulgatoren in der wässrigen Phase gelöst oder vordispergiert werden und anschließend mit den Silanoligomeren emulgiert werden. Alternativ können die erfindungsgemäß einzusetzenden fluorhaltigen Polymere und/oder Katalysatoren zusammen mit den Silanoligomeren zur wässrigen Grundmischung zudosiert werden und anschließend emulgiert werden. Schließlich können die erfindungsgemäßen wässrigen Emulsionen durch einfaches Mischen der fluorhaltigen Polymere und/oder Katalysatoren mit vorgefertigten, wässrigen Emulsion in einem Behältnis mit geeignetem Mischaggregat erhalten werden. Dieses Mischen kann kontinuierlich, z. B. durch Verwendung eines Mischrohres, oder diskontinuierlich erfolgen.

Auch kann man vorteilhaft den Gehalt an Silanoligomer in der Ölphase durch Zusatz eines geeigneten organischen Lösemittels, beispielsweise - aber nicht ausschließlich - aliphatische sowie aromatische Kohlenwasserstoffe mit einem Siedepunkt oberhalb der Raumtemperatur, wie C₆- bis C₁₂-Alkane, Benzin, Waschbenzin, Diesel, Kerosin, Toluol, Xylol, Alkohole bzw. Polyole, wie Pentanol, Hexanol, Octanol, Nonanol, Isononanol, Glycerin, Ketone oder ein Gemisch aus mindestens zwei der zuvor genannten organischen Lösemittel, einstellen.

Gegenstand der vorliegenden Erfindung ist daher ein Verfahren zur Herstellung einer erfindungsgemäßen Zusammensetzung unter Vermeidung starker Schaumbildung, indem man
- 5 bis 70 Gew.-% des zu verwendenden Lösemittels vorlegt,
- das fluorhaltige Polymer einrührt,
- anschließend die restliche Menge an Lösemittel zusetzt,
- nachfolgend unter Rühren ein Gemisch aus mindestens einem Silanoligomer und Katalysator dosiert,
- optional Emulgator und/oder Hilfsstoffe zusetzt und
- nachrührt und/oder emulgiert.

Weiter ist Gegenstand der vorliegenden Erfindung die Verwendung einer erfindungsgemäßen Zusammensetzung oder einer nach dem erfindungsgemäßen Verfahren hergestellten Zusammensetzung zum Hydrophobieren von porösen mineralischen Substraten, insbesondere Baustoffen wie Beton, Faserzement, Ton, Ziegel, Marmor, Granit, Sandstein oder Kalksandstein, und zur Erzeugen eines Abperleffekts auf der behandelten Substratoberfläche, wobei Wassertropfen, die über eine Zeit von 1 Minuten auf der behandelte Substratoberfläche verbleiben, die Oberfläche praktisch nicht benetzen und so vorteilhaft keine mit dem bloßen Auge erkennbaren Benetzungsflecken hinterlassen.

Die Erfindung wird anhand der folgenden Beispiele näher erläutert, die jedoch den Gegenstand der Erfindung nicht beschränken.

### Beispiele

Alle nachfolgenden Angaben in Gew-% sind bezogen auf die gesamte Masse der Endformulierung.

### Komponente 1:

**1a:** 49 %ige wässrige Emulsion eines oligomerisierten Alkyltrialkoxysilans (Protectosil^{®} WS 600 der Firma Evonik Degussa GmbH).
**1b:** Oligomerisiertes Alkyltrialkoxysilan (Protectosil^{®} 266 der Firma Evonik Degussa GmbH).
**1c:** Oligomerisiertes n-Propyltriethoxysilan und Katalysator:
   200 g der Verbindung **1b** werden unter kräftigem Rühren mit 1,8 g Tetra-(n-propoxy)-zirkonat (Tyzor NPZ der Firma DuPont) versetzt.

### Komponente 2:

**2a:** 20-40 %ige Dispersion von Difluormethylengruppen enthaltenden Telomer B Phosphat Diethanolamin Salzen in einer Mischung aus Wasser (35-45%) und Isopropanol (20-30%) (Zonyl^{®} 9027 der Firma DuPont).
**2b:** 10-20 %ige Lösung eines Harzes enthaltend Polyacrylate mit fluorierten Seitenketten in einem Kohlenwasserstoffgemisch (Unidyne TG 656 der Firma Daykin Industries).
**2c:** Oligomerisiertes 3,3,3-Trifluorpropylmethyldimethoxysilan. Das Oligomere ist erhältlich nach EP 0814110.
**2d:** Fluoriertes Copolymer mit 25% trockener Substanz gelöst in einem Kohlenwasserstoffgemisch (Zonyl^{®} 210 der Firma DuPont).

### Beispiel 1 - Vergleichsbeispiel

Bei Raumtemperatur wurde **1b** in einem sauberen, trockenen Glasgefäß vorgelegt und im Massenverhältnis 1:4 mit dem Kohlenwasserstoffgemisch Shellsol D60 (erhältlich von Shell Chemicals) verdünnt. Die entstandene Mischung wurde für weitere 10 Minuten gerührt und konnte anschließend direkt verwendet werden.

### Beispiel 2 - Vergleichsbeispiel

Bei Raumtemperatur wurde **1b** in einem sauberen, trockenen Glasgefäß vorgelegt und im Massenverhältnis 1:9 mit dem Kohlenwasserstoffgemisch Shellsol D60 (erhältlich von Shell Chemicals) verdünnt. Unter langsamem Rühren auf einem Magnetrührer wurden 3 Gew-% **2a** zugegeben. Die entstandene Mischung wurde für weitere 10 Minuten gerührt und konnte anschließend direkt verwendet werden.

### Beispiel 3 - Vergleichsbeispiel

Bei Raumtemperatur wurde Propyltriethoxysilan im Massenverhältnis 1:4 mit dem Kohlenwasserstoffgemisch Shellsol D60 (erhältlich von Shell Chemicals) verdünnt. Zu dieser Lösung werden 5 Gew-% **2c** und 1 Gew-% Tetraisopropyltitanat zugegeben. Die Mischung wird für weitere 10 Minuten auf dem Magnetrührer gerührt und anschließend direkt verwendet.

### Beispiel 4 - Vergleichsbeispiel

Bei Raumtemperatur wurde **1a** in einem sauberen, trockenen Glasgefäß vorgelegt. Die entstandene Mischung wurde im Massenverhältnis 1:4 mit vollentsalztem Wasser verdünnt, für weitere 10 Minuten gerührt und konnte anschließend direkt verwendet werden.

### Beispiel 5 - Vergleichsbeispiel

Bei Raumtemperatur wurden 8 Gew-% vollentsalztes Wasser in einem sauberen, trockenen Glasgefäß vorgelegt. Unter langsamem Rühren auf einem Magnetrührer wurden 2 Gew-% **2a** zugegeben und anschließend mit 70,4 Gew-% vollentsalztem Wasser versetzt. Die entstandene Mischung wurde schließlich mit 19,6 Gew-% **1a** versetzt, für weitere 10 Minuten gerührt und konnte anschließend direkt verwendet werden.

### Beispiel 6

Bei Raumtemperatur wurden 9 Gew-% Shellsol D60 (erhältlich von Shell Chemicals) in einem sauberen, trockenen Glasgefäß vorgelegt und 3 Gew.-% **2b** unter langsamem Rühren mittels Magnetrührer zugeben. Anschließend wurden unter weiterem langsamem Rühren 78 Gew-% Shellsol D60 gefolgt von 10 Gew.-% **1c** zugegeben. Die entstandene Mischung wurde für weitere 10 Minuten gerührt und konnte anschließend direkt verwendet werden.

### Beispiel 7

Bei Raumtemperatur wurden 9 Gew-% *n*-Heptan in einem sauberen, trockenen Glasgefäß vorgelegt und 3 Gew.-% **2d** unter langsamem Rühren mittels Magnetrührer zugeben. Anschließend wurden unter weiterem langsamem Rühren 78 Gew-% n-Heptan gefolgt von 10 Gew.-% **1c** zugegeben. Die entstandene Mischung wurde für weitere 10 Minuten gerührt und konnte anschließend direkt verwendet werden.

### Auswertung der Beispiele

Die nachfolgende Tabelle 1 führt die Ergebnisse der oben angeführten Beispiele auf.
Unter Einsatz der gebrauchsfertigen Lösungen wurden Betonplatten sowie Kalksandsteinplatten der Abmessungen 15 x 7,5 x 1 cm mit der jeweils angegebenen Auftragsmenge durch tauchen der Platten behandelt. Für die Bestimmung der Güte der Abperleigenschaften wurden Wassertropfen aufgesetzt und soweit nicht aufgesogen nach 1 Minute Kontaktzeit die Randwinkel bestimmt. Zusätzlich wurde die Tropfen nach 10 Minuten Kontaktzeit abgewischt und die zurückbleibende Fläche beurteilt (Fleckbildung: 0 = Tropfen perlt ab, 1 = keine Benetzung, 2 = Kontaktfläche zur Hälfte benetzt, 3 = Kontaktfläche voll benetzt, 4 = dunkle Färbung der Kontaktfläche, Tropfen etwas aufgesogen, 5 = dunkle Färbung der Kontaktfläche, Tropfen zu 50% aufgesogen, 6 = dunkle Färbung der Kontaktfläche, Tropfen ganz aufgesogen).

Die hydrophobierenden Eigenschaften werden durch die Reduktion der Wasseraufnahme der einzelnen Mischungen ausgedrückt. Dazu werden Beton und Kalksandsteinwürfel der Kantenlänge 5 cm mit der angegebenen Menge durch tauchen behandelt. Nach einer Abbindezeit von 2 Wochen wurden die behandelten Würfel für 24 h vollständig unter Wasser gelagert. Anschließend wurde die Gewichtszunahme bestimmt. Die Reduktion der Wasseraufnahme ergibt sich im Vergleich zu einem unbehandelten Würfel.

**Tabelle 1**

| Mischung aus Beispiel | Substrat | Auftragsmenge | Kontaktwinkel nach 1 Minute | Fleckbildung nach 10 Minuten | Reduktion der Wasseraufnahme |
|---|---|---|---|---|---|
| 1 | Beton | 187 g/m² | 64° | 4 | 84% |
| 2 | Beton | 173 g/m² | 104° | 4 | 92% |
| 3 | Beton | 173 g/m² | 105° | 2 | 91% |
| 4 | Beton | 190 g/m² | 95° | n. b. | 16% |
| 5 | Beton | 213 g/m² | 101° | 2 | 75% |
| 6 | Beton | 173 g/m² | 119° | 1 | 84% |
| 7 | Beton | 187 g/m² | 124° | 1 | 92% |
| 1 | Kalksandstein | 247 g/m² | n. b. | 3 | 96% |
| 2 | Kalksandstein | 213 g/m² | 115° | 3 | 95% |
| 3 | Kalksandstein | 227 g/m² | n. b. | 1 | 96% |
| 4 | Kalksandstein | 187 g/m² | 112° | 2 | 80% |
| 5 | Kalksandstein | 280 g/m² | 122° | 1 | 94% |
| 6 | Kalksandstein | 235 g/m² | 121° | 0 | 95% |
| 7 | Kalksandstein | 220 g/m² | 139° | 0 | 94% |

### Schlussfolgerung:

Die erfindungsgemäßen Zusammensetzungen zeigen sowohl auf Beton, als auch auf Kalksandstein stark verbesserte Abperleigenschaften. Die gewünschten hydrophobierenden Eigenschaften bleiben dabei vollständig erhalten.

## Patentansprüche

1. Zusammensetzung zur Hydrophobierung poröser mineralischer Substrate und zur Erzeugung eines Abperleffekts auf der Oberfläche des Substrats basierend auf
- mindestens einem Silanoligomer, wobei das Silanoligomer ausgewählt ist aus Alkylalkoxysiloxanen oder entsprechenden Gemischen der idealisierten Formel I 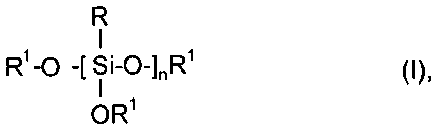 in der n gleich oder verschieden ist und n eine Zahl von 2 bis 40 ist, bevorzugt von 2 bis 20, R für C₁-C₁₈-Alkyl steht, Gruppen R¹ gleich oder verschieden sind und R¹ ein Wasserstoffatom oder ein Alkylrest mit 1 bis 6 Kohlenstoffatomen darstellt, wobei das mittlere Molekulargewicht ≤ 1 200 g/Mol beträgt,
- mindestens einem Hydrolyse- bzw. Kondensationskatalysator,
- mindestens einem fluorhaltigen Polymer,
- optional Wasser und/oder mindestens einem organischen Lösemittel,
- optional mindestens einem Emulgator und
- optional weiteren Hilfsstoffen.

2. Zusammensetzung nach Anspruch 1,
**gekennzeichnet durch**
einen Gehalt an Wirkstoff von 1 bis 98 Gew-%, bezogen auf die Zusammensetzung.

3. Zusammensetzung nach Anspruch 1 oder 2,
**gekennzeichnet durch**
einen Gehalt mindestens eines organischen Lösemittels oder Verdünnungsmittels aus der Reihe der aliphatischen sowie aromatischen Kohlenwasserstoffe mit einem Siedepunkt oberhalb der Raumtemperatur, vorzugsweise C6- bis C12-Alkane, Benzin, Waschbenzin, Diesel, Kerosin, Toluol, Xylol, der Alkohole bzw. Polyole, vorzugsweise Methanol, Ethanol, Isopropanol, t-Butanol, Pentanol, Hexanol, Octanol, Nonanol, Isononanol, Glycerin, der Ketone, vorzugsweise Aceton, oder eines Gemischs aus mindestens zwei der zuvor genannten organischen Löse- bzw. Verdünnungsmittel.

4. Zusammensetzung nach einem der Ansprüche 1 bis 3,
**gekennzeichnet durch**
einen Gehalt mindestens eines Hydrolyse- bzw. Kondensationskatalysators aus der Reihe der Komplexverbindungen von Elementen der 3. und 4. Hauptgruppe des Periodensystems der Elemente (PSE) sowie der Nebengruppen II, III, IV, V, VI, VII und VIIIa, VIIIb und VIIIc des PSE, insbesondere Titanate oder Zirkonate, aus der Reihe der Salze von Elementen der 1. und 2. Hauptgruppe des PSE, aus der Reihe der Alkoholate, vorzugsweise Natriummethanolat oder Natriumethanolat, aus der Reihe der Aminoalkohole, vorzugsweise 2-Aminoethanol oder 2-(N,N-dimethyl)aminoethanol und/oder aus der Reihe der Carbonsäuren oder Mineralsäuren.

5. Zusammensetzung nach Anspruch 4,
**gekennzeichnet durch**
einen Gehalt an Katalysator von 0,1 bis 3 Gew.-%, bezogen auf die Menge an eingesetztem Silanoligomer.

6. Zusammensetzung nach einem der Ansprüche 1 bis 5,
**gekennzeichnet durch**
einen Gehalt mindestens eines fluorhaltigen Polymers, Copolymers oder Terpolymers, wobei besagte fluorhaltige Verbindungen mindestens eine CF2 - oder eine CF3-Gruppe enthalten.

7. Zusammensetzung nach einem der Ansprüche 1 bis 6,
**gekennzeichnet durch**
einen Gehalt mindestens eines fluorhaltigen Polymers der allgemeinen Formel II 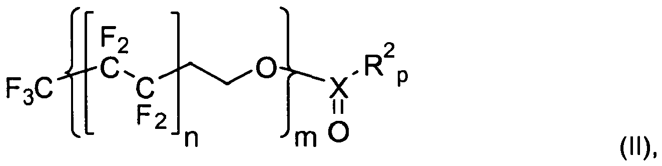 worin unabhängig voneinander
X = C, P oder S ist,
R2 = -H, -OH, -CH3, -C2H4, -CH=CH2, -C(-CH3)=CH2, 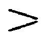 (CH-CH2)q- oder 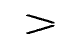 (C(-CH₃)CH₂)_{q}- mit q = 2 bis 200 ist,
m = 1 , 2 oder 3 ist,
n = 1 bis 100 ist, und
p = 0, 1 oder 2 ist, mit der Voraussetzung, dass falls X=C, m+p = 2 ist, falls X=P, m+p = 3 ist und falls X=S, m+p = 2 ist,
oder
einen Gehalt mindestens eines fluorhaltigen Polymers der allgemeinen Formel III 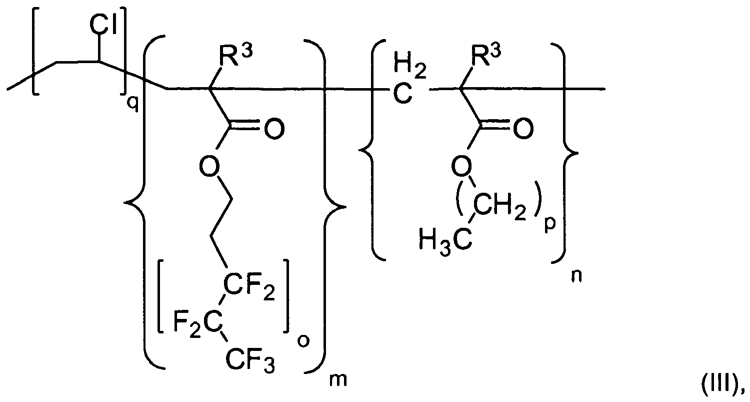 worin unabhängig voneinander
R3 = -H, -CH3 ist,
m = 1 bis 200 ist,
n = 0 bis 200 ist,
o = 1 bis 100 ist,
p = 1 bis 100 ist und
q = 0 bis 100 ist.

8. Zusammensetzung nach einem der Ansprüche 1 bis 7,
**gekennzeichnet durch**
einen Gehalt an fluorhaltigem Polymeren von 0,5 bis 6 Gew.-%, bezogen auf die Zusammensetzung.

9. Zusammensetzung nach einem der Ansprüche 1 bis 8,
**gekennzeichnet durch**
einen Gehalt mindestens eines Emulgators ausgewählt aus Alkylsulfaten mit C8-C18-Alkyl, Alkyl- und Alkarylethersulfaten mit C8-C18-Alkyl im hydrophoben Rest und mit 1 bis 40 Ethylenoxid (EO)- bzw. Propylenoxid (PO)-Einheiten, Alkylsulfonate mit C8-C18-Alkyl, Alkarylsulfonate mit C8-C18-Alkyl, und Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C8-C20-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C8-C22-Alkylresten mit Ethylenoxid oder Propylenoxid, Alkylpolyglykoside mit linearen oder verzweigten gesättigten oder ungesättigten C8-C24-Alkylresten und Oligoglykosidresten mit 1 bis 10 Hexose- oder Pentoseeinheiten, siliciumfunktionelle Tenside oder Mischungen dieser Emulgatoren.

10. Zusammensetzung nach Anspruch 9,
**gekennzeichnet durch**
einen Gehalt an Emulgator von 0,01 bis 5 Gew.-%, bezogen auf Gesamtgewicht der Zusammensetzung.

11. Zusammensetzung nach einem der Ansprüche 1 bis 10,
**dadurch gekennzeichnet,**
**dass** sie noch übliche Hilfsstoffe, ausgewählt aus anorganischen oder organischen Säuren, Puffersubstanzen, Fungiziden, Bakteriziden, Algiziden, Mikrobioziden, Geruchsstoffen, Korrosionsinhibitoren, Konservierungsmittel, Rheologiehilfsmittel enthält.

12. Verfahren zur Herstellung einer Zusammensetzung nach einem der Ansprüche 1 bis 11, indem man
- 5 bis 70 Gew.-% des zu verwendenden Lösemittels vorlegt,
- das fluorhaltige Polymer einrührt,
- anschließend die restliche Menge an Lösemittel zusetzt,
- nachfolgend unter Rühren ein Gemisch aus mindestens einem Silanoligomer und Katalysator dosiert,
- optional Emulgator und/oder Hilfsstoffe zusetzt und
- nachrührt und/oder emulgiert.

13. Verwendung einer Zusammensetzung nach einem der Ansprüche 1 bis 11 oder einer nach dem Verfahren gemäß Anspruch 12 hergestellten Zusammensetzung zum Hydrophobieren von porösen mineralischen Substraten und zur Erzeugen eines Abperleffekts auf der behandelten Substratoberfläche, wobei Wassertropfen, die über eine Zeit von 10 Minuten auf die behandelte Substratoberfläche verbleiben, keine Benetzungsflecken hinterlassen.

## Claims

1. Composition for imparting water repellency to porous mineral substrates and for producing a water repellency effect on the surface of the substrate, based on
- at least one silane oligomer, the silane oligomer being selected from alkylalkoxysiloxanes or corresponding mixtures of the idealized formula I 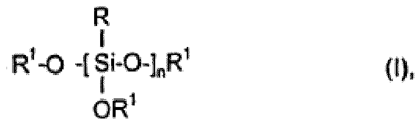 in which n is identical or different and n is a number from 2 to 40, preferably from 2 to 20, R represents C₁-C₁₈-alkyl, groups R¹ are identical or different and R¹ represents a hydrogen atom or an alkyl radical having 1 to 6 carbon atoms, the average molecular weight being ≤ 1200 g/mol,
- at least one hydrolysis or condensation catalyst,
- at least one fluorine-containing polymer,
- optionally water and/or at least one organic solvent,
- optionally at least one emulsifier and
- optionally further auxiliaries.

2. Composition according to Claim 1,
**characterized by**
a content of active substance of 1 to 98% by weight, based on the composition.

3. Composition according to Claim 1 or 2,
**characterized by**
a content of at least one organic solvent or diluent from the series consisting of the aliphatic and aromatic hydrocarbons having a boiling point above room temperature, preferably C₆- to C₁₂-alkanes, benzine, petroleum ether, diesel, kerosene, toluene, xylene, the alcohols or polyols, preferably methanol, ethanol, isopropanol, tert-butanol, pentanol, hexanol, octanol, nonanol, isononanol, glycerol, the ketones, preferably acetone, or a mixture of at least two of the abovementioned organic solvents or diluents.

4. Composition according to any one of Claims 1 to 3,
**characterized by**
a content of at least one hydrolysis or condensation catalyst from the series consisting of the complex compounds of the elements of the 3rd and 4th main groups of the Periodic Table of the Elements (PTE) and of the subgroups II, III, IV, V, VI, VII and VIIIa, VIIIb and VIIIc of the PTE, in particular titanates or zirconates, from the series consisting of the salts of elements of the 1st and 2nd main group of the PTE, from the series consisting of the alcoholates, preferably sodium methanolate or sodium ethanolate, from the series consisting of the amino alcohols, preferably 2-aminoethanol or 2-(N,N-dimethyl)aminoethanol, and/or from the series consisting of the carboxylic acids or mineral acids.

5. Composition according to Claim 4,
**characterized by**
a catalyst content of 0.1 to 3% by weight, based on the amount of silane oligomer used.

6. Composition according to any one of Claims 1 to 5,
**characterized by**
a content of at least one fluorine-containing polymer, copolymer or terpolymer, said fluorine-containing compounds containing at least one CF₂ or one CF₃ group.

7. Composition according to any one of Claims 1 to 6,
**characterized by**
a content of at least one fluorine-containing polymer of the general formula II 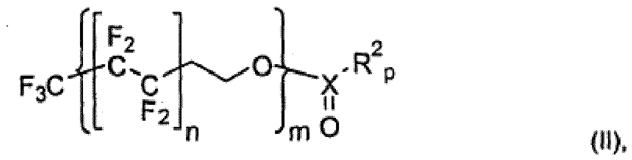 in which, independently of one another,
X is C, P or S,
R² is -H, -OH, -CH₃, -C₂H₄, -CH=CH₂, -C(-CH₃)=CH₂, 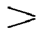 (CH-CH₂)_{q}- or 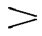 (C(-CH₃)CH₂)_{q}- where q = 2 to 200,
m is 1, 2 or 3,
n is 1 to 100, and
p is 0, 1 or 2, with the precondition that m+p = 2 if X=C, m+p = 3 if X=P, and m+p = 2 if X=S,
or
a content of at least one fluorine-containing polymer of the general formula III 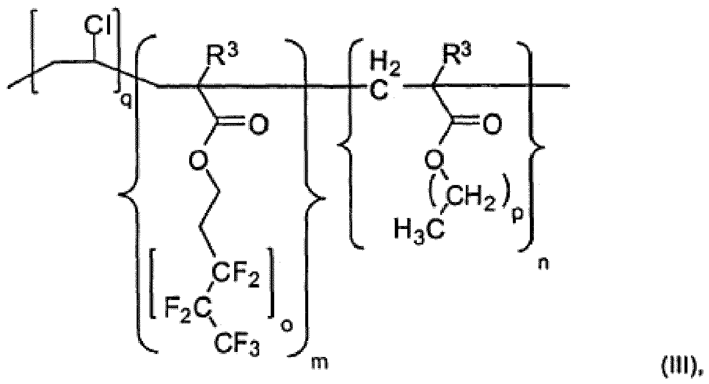 in which, independently of one another,
R³ is -H, -CH₃,
m is 1 to 200,
n is 0 to 200,
o is 1 to 100,
p is 1 to 100 and
q is 0 to 100.

8. Composition according to any one of Claims 1 to 7,
**characterized by**
a content of fluorine-containing polymers of 0.5 to 6% by weight, based on the composition.

9. Composition according to any one of Claims 1 to 8,
**characterized by**
a content of at least one emulsifier selected from alkylsulphates having C₈-C₁₈-alkyl, alkyl and alkaryl ether sulphates having C₈-C₁₈-alkyl in the hydrophobic radical and having 1 to 40 ethylene oxide (EO) or propylene oxide (PO) units, alkylsulphonates having C₈-C₁₈-alkyl, alkarylsulphonates having C₈-C₁₈-alkyl, and monoesters of sulphosuccinic acid with monohydric alcohols or alkylphenols having 5 to 15 carbon atoms, alkali metal and ammonium salts of carboxylic acids having 8 to 20 carbon atoms in the alkyl, aryl, alkaryl or aralkyl radical, alkyl and alkaryl phosphates having 8 to 20 carbon atoms in the organic radical, alkyl ether or alkaryl ether phosphates having 8 to 20 carbon atoms in the alkyl or alkaryl radical and 1 to 40 EO units, alkylpolyglycol ethers and alkarylpolyglycol ethers having 8 to 40 EO units and C₈-C₂₀-carbon atoms in the alkyl or aryl radicals, ethylene oxide/propylene oxide (EO/PO) block copolymer having 8 to 40 EO or PO units, adducts of alkylamines having C₈-C₂₂-alkyl radicals with ethylene oxide or propylene oxide, alkylpolyglycosides having linear or branched saturated or unsaturated C₈-C₂₄-alkyl radicals and oligoglycoside radicals having 1 to 10 hexose or pentose units, silicon-functional surfactants or mixtures of these emulsifiers.

10. Composition according to Claim 9,
**characterized by**
an emulsifier content of 0.01 to 5% by weight, based on the total weight of the composition.

11. Composition according to any one of Claims 1 to 10,
**characterized in that**
it also contains customary auxiliaries selected from inorganic or organic acids, buffer substances, fungicides, bactericides, algicides, microbicides, odorous substances, corrosion inhibitors, preservatives, rheology auxiliaries.

12. Process for the preparation of a composition according to any one of Claims 1 to 11, by
- initially introducing 5 to 70% by weight of the solvent to be used,
- stirring in the fluorine-containing polymer,
- then adding the remaining amount of solvent,
- subsequently metering a mixture of at least one silane oligomer and catalyst with stirring,
- optionally adding emulsifier and/or auxiliaries and
- stirring further and/or emulsifying.

13. Use of a composition according to any one of Claims 1 to 11 or of a composition prepared by the process according to Claim 12 for imparting water repellency to porous mineral substrates and for producing a water repellency effect on the treated substrate surface, water drops which remain on the treated substrate surface over a time of 10 minutes not leaving behind any wetting spots.

## Revendications

1. Composition pour l'hydrofugation de substrats minéraux poreux et pour générer un effet perlant à la surface du substrat, à base
- d'au moins un oligomère de silane, l'oligomère de silane étant choisi parmi les alkylalcoxysiloxanes ou les mélanges correspondants de la formule idéalisée I 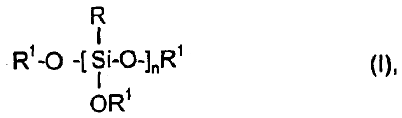 dans laquelle n est identique ou différent et vaut un nombre de 2 à 40, de préférence de 2 à 20, R représente C₁-C₁₈-alkyle, les groupes R¹ sont identiques ou différents et R¹ représente un atome d'hydrogène ou un radical alkyle comprenant 1 à 6 atomes de carbone, le poids moléculaire moyen étant ≤ 1200 g/mole,
- d'au moins un catalyseur d'hydrolyse ou, selon le cas, de condensation,
- d'au moins un polymère contenant du fluor,
- éventuellement d'eau et/ou d'au moins un solvant organique,
- éventuellement d'au moins un émulsifiant et
- éventuellement d'autres additifs.

2. Composition selon la revendication 1, **caractérisée par** une teneur en substance active de 1 à 98% en poids, par rapport à la composition.

3. Composition selon la revendication 1 ou 2, **caractérisée par** une teneur en au moins un solvant ou diluant organique de la série des hydrocarbures aliphatiques ainsi qu'aromatiques, présentant un point d'ébullition supérieur à la température ambiante, de préférence les C₆-C₁₂-alcanes, l'essence, l'essence de lavage, le diesel, le kérosène, le toluène, le xylène, des alcools ou, selon le cas, des polyols, de préférence le méthanol, l'éthanol, l'isopropanol, le t-butanol, le pentanol, l'hexanol, l'octanol, le nonanol, l'isononanol, le glycérol, des cétones, de préférence l'acétone, ou un mélange d'au moins deux des solvants ou, selon le cas, diluants organiques susmentionnés.

4. Composition selon l'une quelconque des revendications 1 à 3, **caractérisée par** une teneur en au moins un catalyseur d'hydrolyse ou, selon le cas, de condensation de la série des composés complexes des éléments du 3ème et 4ème groupe principal du système périodique des éléments (SPE) ainsi que des groupes secondaires II, III, IV, V, VI, VII et VIIIa, VIIIb et VIIIc du SPE, en particulier les titanates ou les zirconates, de la série des sels des éléments du 1er et du 2ème groupe principal du SPE, de la série des alcoolates, de préférence le méthanolate de sodium ou l'éthanolate de sodium, de la série des aminoalcools, de préférence le 2-aminoéthanol ou le 2-(N,N-diméthyl)aminoéthanol et/ou de la série des acides carboxyliques ou des acides minéraux.

5. Composition selon la revendication 4, **caractérisée par** une teneur en catalyseur de 0,1 à 3% en poids, par rapport à la quantité d'oligomère de silane utilisée.

6. Composition selon l'une quelconque des revendications 1 à 5, **caractérisée par** une teneur en au moins un polymère, copolymère ou terpolymère contenant du fluor, lesdits composés contenant du fluor contenant au moins un groupe CF₂ ou CF₃.

7. Composition selon l'une quelconque des revendications 1 à 6, **caractérisée par** une teneur en au moins un polymère contenant du fluor de formule générale II 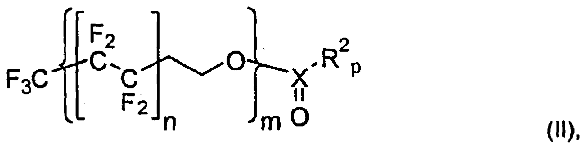 dans laquelle, indépendamment l'un de l'autre :
X = C, P ou S,
R² = -H, -OH, -CH₃, -C₂H₄, -CH=CH₂, -C(-CH₃)=CH₂, > (CH-CH₂)_{q}- ou > (C(-CH₃)CH₂)_{q}- avec q = 2 à 200,
m = 1, 2 ou 3,
n = 1 à 100 et
p = 0, 1 ou 2, à condition que, lorsque X = C, m + p = 2, lorsque X = P, m + p = 3 et lorsque X = S, m + p = 2,
ou
par une teneur en au moins un polymère contenant du fluor de formule générale III 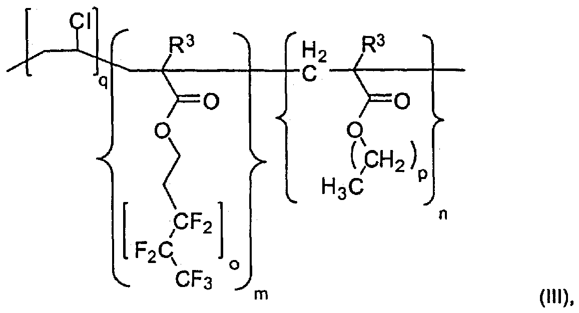 dans laquelle, indépendamment l'un de l'autre :
R³ = -H, -CH₃,
m = 1 à 200,
n = 0 à 200,
o = 1 à 100,
p = 1 à 100 et
q = 0 à 100.

8. Composition selon l'une quelconque des revendications 1 à 7, **caractérisée par** une teneur en polymères contenant du fluor de 0,5 à 6% en poids, par rapport à la composition.

9. Composition selon l'une quelconque des revendications 1 à 8, **caractérisée par** une teneur en au moins un émulsifiant, choisi parmi les alkylsulfates présentant C₈-C₁₈-alkyle, les alkyléthersulfates et les alkaryléthersulfates présentant C₈-C₁₈-alkyle dans le radical hydrophobe et présentant 1 à 40 unités d'oxyde d'éthylène (OE) ou, selon le cas, d'oxyde de propylène (OP), les alkylsulfonates présentant C₈-C₁₈-alkyle, les alkarylsulfonates présentant C₈-C₁₈-alkyle, et les semi-esters de l'acide sulfosuccinique présentant des alcools monovalents ou des alkylphénols monovalents comprenant 5 à 15 atomes de carbone, les sels de métal alcalin et d'ammonium d'acides carboxyliques comprenant 8 à 20 atomes de carbone dans le radical alkyle, aryle, alkaryle ou aralkyle, les alkylphosphates et alkarylphosphates comprenant 8 à 20 atomes de carbone dans le radical organique, les alkylétherphosphates ou, selon le cas, les alkarylétherphosphates comprenant 8 à 20 atomes de carbone dans le radical alkyle ou, selon le cas, alkaryle et 1 à 40 unités d'OE, les alkylpolyglycoléthers et les alkarylpolyglycoléthers comprenant 8 à 40 unités d'OE et 8 à 20 atomes de carbone dans les radicaux alkyle ou aryle, les copolymères à blocs d'oxyde d'éthylène/oxyde de propylène (OE/OP) comprenant 8 à 40 unités d'OE ou, selon le cas, d'OP, les produits d'addition d'alkylamines comprenant des radicaux C₈-C₂₂-alkyle avec de l'oxyde d'éthylène ou de l'oxyde de propylène, les alkylpolyglycosides avec des radicaux C₈-C₂₄-alkyle linéaires ou ramifiés, saturés ou insaturés et des radicaux d'oligoglycoside comprenant 1 à 10 unités d'hexose ou de pentose, les agents tensioactifs à fonctionnalité silicium ou des mélanges de ces émulsifiants.

10. Composition selon la revendication 9, **caractérisée par** une teneur en émulsifiant de 0,01 à 5% en poids, par rapport au poids total de la composition.

11. Composition selon l'une quelconque des revendications 1 à 10, **caractérisée en ce qu'**elle contient encore des adjuvants usuels, choisis parmi les acides inorganiques ou organiques, les substances tampon, les fongicides, les bactéricides, le algicides, les microbiocides, les substances odoriférantes, les inhibiteurs de corrosion, les conservateurs, les adjuvants de rhéologie.

12. Procédé pour la préparation d'une composition selon l'une quelconque des revendications 1 à 11, dans lequel
- on dispose au préalable 5 à 70% en poids du solvant à utiliser,
- on délaye le polymère contenant du fluor,
- on ajoute ensuite la quantité résiduelle de solvant,
- on dose ensuite, sous agitation, un mélange d'au moins un oligomère de silane et de catalyseur,
- on ajoute éventuellement un émulsifiant et/ou des adjuvants et
- on post-agite et/ou émulsifie.

13. Utilisation d'une composition selon l'une quelconque des revendications 1 à 11 ou d'une composition préparée selon le procédé selon la revendication 12 pour hydrofuger des substrats minéraux poreux et pour générer un effet perlant sur la surface traitée du substrat, les gouttes d'eau, qui restent pendant un laps de 10 minutes sur la surface traitées du substrat ne laissant pas de taches d'humidité.
